# EUROPÄISCHE PATENTSCHRIFT

(11) **EP 0 889 937 B1**
(45) Veröffentlichungstag und Bekanntmachung des Hinweises auf die Patenterteilung: **05.07.2000**
(21) Anmeldenummer: 97914306.2
(22) Anmeldetag: 25.03.1997
(51) Int. Cl.: C09D 5/20, C08G 18/10, C08G 18/08

(54) **LÖSEMITTELFREIER, ZWEIKOMPONENTIGER ABZIEHLACK FÜR METALLOBERFLÄCHEN**
SOLVENTLESS TWO-COMPONENT STRIPPABLE LACQUER FOR METAL SURFACES
REVETEMENT PELABLE EXEMPT DE SOLVANT, A DEUX COMPOSANTS, POUR SURFACES METALLIQUES

(30) Priorität: 26.03.1996 DE 19611875
(43) Veröffentlichungstag der Anmeldung: 13.01.1999
(73) Patentinhaber: Relius Coatings Gmbh & Co., 26123 Oldenburg (DE)
(72) Erfinder: LEMKE, Horst, D-27721 Ritterhude (DE); HOHNHOLZ, Dieter, 27243 Gross Ippener (DE)
(74) Vertreter: Hansen, Bernd, Dr. Dipl.-Chem.
(86) Internationale Anmeldenummer: EP9701514
(87) Internationale Veröffentlichungsnummer: WO9735932

(56) Entgegenhaltungen:
- EP-A- 0 239 396
- EP-A- 0 376 674
- BE-A- 685 700
- US-A- 3 661 840

## Beschreibung

Gegenstand der vorliegenden Erfindung ist ein lösemittelfreier, zweikomponentiger Abziehlack für Metalloberflächen sowie ein Verfahren zur Oberflächenbeschichtung von Metallteilen, insbesondere Aluminiumteilen, mit Hilfe dieses Abziehlackes.

Im Flugzeugbau werden die Oberflächen von Aluminiumteilen zum Zwecke der Gewichtsreduzierung teilweise mit Hilfe von Beizbädern behandelt, wobei es zu einem chemischen Abtrag von Aluminium kommt. Um den chemischen Angriff auf den nicht abzutragenden Teilbereichen der Metalloberflächen zu verhindern, werden diese vor der Behandlung mit den Beizbädem mit einem Abziehlack im Spritz- oder Gießverfahren beschichtet und somit vor der chemischen Behandlung geschützt.

Die Anforderungen an den Abziehlack sind hierbei relativ hoch, denn er muß chemisch resistent gegen Säuren und Basen sein, schnellhärtende und -trocknende Eigenschaften aufweisen, um Zeit und Kosten zu sparen, sowie eine kontrollierte Haftung besitzen, damit er nach Abschluß des chemischen Metallabtrages problemlos und rückstandsfrei abgezogen werden kann.

Die bisher bekannten und in der Praxis eingesetzten Lacke weisen in der Regel einen relativ niedrigen Bindemittelgehalt (ca. 30 bis 35 Gew. -%) und einen vergleichsweise hohen Anteil an organischen Lösemitteln (ca. 65 bis 70 Gew. -%) auf. Da diese Lacke schnelltrocknend sein müssen, kommen überwiegend leichtflüchtige und leicht entflammbare Lösemittel zum Einsatz, deren Flammpunkt meistens weit unter 21 °C liegt und die außerdem noch toxisch sein können (wie z. B. Toluol). Aus Umweltschutzgründen dürfen diese Lösemittel nicht mehr an die Umwelt abgegeben werden, wodurch eine sehr aufwendige Rückgewinnung oder Entsorgung dieser Lösemittel erforderlich ist.

Ein weiterer gravierender Nachteil der bisher bekannten Abziehlacke ist der Umstand, daß für die ausreichende Beschichtung der Metalloberflächen mindestens drei Spritzgänge mit Trockenzeiten von insgesamt mehr als 4 Stunden erforderlich sind, wodurch das bisher praktizierte Verfahren sehr zeit- und kostenintensiv ist.

Gemäß den US-PS 3,661,840 oder 3,544,400 bestehen derartige zweikomponentige Abziehlacke bspw. aus HO- oder HS-modifizierten Polybutadienen, Polyisocyanaten oder Diaminen, hohen Anteilen an Füllstoffen und leichtflüchtigen Lösemitteln sowie Phenol- oder Epoxidharzen zur Haftverbesserung.

Der vorliegenden Erfindung lag daher die Aufgabe zugrunde, einen Abziehlack für Metalloberflächen zu entwickeln, welcher die genannten Nachteile des Standes der Technik nicht aufweist, sondern zum einen lösemittelfrei ist und zum anderen gute anwendungstechnische Eigenschaften im Hinblick auf Chemikalienresistenz sowie Härtungs- und Haftungseigenschaften aufweist.

Die Aufgabe wurde erfindungsgemäß durch einen Lösemittelfreien zweikomponentigen Abziehlack mit den Komponenten A) und B) gelöst,
wobei A) im wesentlichen die folgenden Bestandteile enthält:
   - 5 bis 20 Gew.-%: eines ggf. substituierten aromatischen Diamins,
   - 0,1 bis 5 Gew.-%: eines Entwässerungsmittels,
   - 0,01 bis 1 Gew.-%: eines Beschleunigers auf Basis von tertiären Aminen,
   - 0,01 bis 1 Gew. -%: eines Beschleunigers auf Basis von organischen Zinnverbindungen,
   und als Rest ein Polyetherpolyol auf Basis von Poly(oxyalkylen)glykolen;
und wobei B) im wesentlichen die folgenden Bestandteile enthält:
   - 40 bis 60 Gew.-%: eines aromatischen Diisocyanats auf Basis eines Phenylen- oder Toluylendiisocyanats,
   - 40 bis 60 Gew. -%: eines Polyetherpolyols auf Basis von Poly(oxyalkylen)glykolen.

Es hat sich nämlich überraschenderweise gezeigt, daß der erfindungsgemäße Abziehlack trotz seiner Lösemittelfreiheit sowohl schnellhärtend als auch schnelltrocknend ist, in einem einzigen Spritzgang auf die zu behandelnde Metalloberfläche aufgebracht werden kann und schließlich problemlos und rückstandsfrei wieder entfernt werden kann.

Der Abziehlack entsprechend der vorliegenden Erfindung besteht - wie bereits erwähnt - aus den beiden Komponenten A) und B). Die Komponente A) enthält mindestens fünf Bestandteile, wobei der Hauptbestandteil mit bis zu 94 Gew.-% (bezogen auf Komponente A) ein Polyetherpolyol auf Basis von Poly(oxyalkylen)glykolen darstellt. Als Polyetherpolyole können hierbei die üblichen Poly(oxyalkylen)glykole auf Basis von Ethylen- und/oder Propylenoxid eingesetzt werden. Gemäß einer bevorzugten Ausführungsform wird ein trifunktionelles Polyetherpolyol auf Basis von Propylenoxid, Ethylenoxid und Trimethylolpropan verwendet, dessen Molmasse im Bereich von 500 bis 5 000 g/mol liegt und das ca. 80 % primäre und ca. 20 % sekundäre Hydroxylgruppen aufweist.

Als zweiter wesentlicher Bestandteil enthält die Komponente A) 5 bis 20 Gew. -% eines ggf. substituierten aromatischen Diamins, welches zur Kettenverlängerung des Urethanprepolymers beiträgt. Hierbei kann auf die üblichen isomeren Phenylendiamine zurückgegriffen werden. Vorzugsweise finden auch methyl- oder ethyl-substituierte aromatische Diamine Verwendung. Besonders bevorzugt wird hierbei Diethyltoluylendiamin eingesetzt, welches bspw. ein NH-Äquivalent von ca. 89 bis 130 aufweist.

Als dritten Bestandteil enthält der erfindungsgemäße Abziehlack 0,1 bis 5 Gew. -% eines Entwässerungsmittels, wobei sich Natrium- oder Kalium-Aluminosilikate besonders bewährt haben, die eine Porengröße von ca. 0,3 bis 0,4 nm besitzen. Das Entwässerungsmittel sorgt dafür, daß der Abziehlack nicht schäumt und porös wird.

Es ist als erfindungswesentlich anzusehen, daß die Komponente A) außerdem noch Beschleuniger sowohl auf Basis von tertiären Aminen als auch auf Basis von organischen Zinnverbindungen jeweils in einer Menge von 0,01 bis 1 Gew. -% enthält, denn nur auf diese Weise ist eine sehr schnelle und ausreichende Härtung des Lackes gewährleistet. Hierbei kann auf die üblichen Beschleuniger zurückgegriffen werden. Vorzugsweise kommen als tertiäre Amine sterisch gehinderte bicyclische Verbindungen wie z. B. 1,4-Diazabicyclo[2.2.2]octan oder 2-Methyl-2-aza-norbornan zum Einsatz. Bei den Beschleunigern auf Basis von organischen Zinnverbindungen ist die Verwendung von Alkylzinnmercaptiden, wie z. B. Dimethylzinnmercaptid, als bevorzugt anzusehen. Gemäß einer bevorzugten Ausführungsform kann der erfindungsgemäße Abziehlack noch 0,01 bis 1 Gew.-% eines Alkoxysilans enthalten, mit welchem die Haftungseigenschaften des Lackes gezielt gesteuert werden können. Das Alkoxysilan kann hierbei Alkoxygruppen mit 1 bis 4 C-Atomen sowie ggf. Glycidoxyalkylreste mit 1 bis 4 C-Atomen aufweisen.

Außerdem besteht im Rahmen der vorliegenden Erfindung die Möglichkeit, der Komponente A) noch 0,1 bis 1,0 Gew. -% eines alkali- und säurebeständigen Pigments oder Farbstoffes zuzusetzen, damit der Abziehlack bei der Verarbeitung optisch leichter zu erkennen ist. Als besonders vorteilhaft haben sich hierbei Monoazo-Farbstoffe oder -Pigmente erwiesen.

Gemäß einer bevorzugten Ausführungsform enthält Komponente A) noch 1 bis 20 Gew.-% micronisiertes Magnesiumsilikat (Talkum) mit einer Teilchengröße von ca. 5 um, wodurch eine Verbesserung der mechanischen (Weiterreißfestigkeit) und chemischen Eigenschaften (Säurebeständigkeit) des Abziehlackes erzielt werden kann.

Die Komponente B), die als PU-Härtungskomponente angesehen werden kann, umfaßt zwei Bestandteile, nämlich 40 bis 60 Gew. -% (bezogen auf Komponente B) eines aromatischen Diisocyanats auf Basis eines Phenylen- oder Toluylendiisocyanats sowie 40 bis 60 Gew. -% eines Polyetherpolyols auf Basis von Poly(oxyalkylen)glykolen, die bevorzugt identisch zu den in Komponente A) beschriebenen Polyetherpolyolen sein können. Beispiele für geeignete aromatische Polyisocyanate sind 1,3- oder 1,4-Phenylendiisocyanate bzw. 2,4- oder 2,6-Toluylendiisocyanate (TDI). Als besonders bevorzugt ist jedoch 4,4'-Diphenylmethandiisocyanat (MDI) anzusehen, weil dieses Isocyanat eine ausreichende schnelle Härtungsreaktion ermöglicht. Die beiden Bestandteile der Komponente B), nämlich aromatisches Diisocyanat und Polyetherpolyol, werden zu einem Prepolymer mit einem NCO-Gehalt von ca. 10 bis 20 % umgesetzt.

Das Gewichtsverhältnis von Komponente A) zu Komponente B) kann in weiten Grenzen variiert werden, doch hat sich ein Gewichtsverhältnis von Komponente A) zu Komponente B) von 3: 1 bis 1: 1 als besonders vorteilhaft erwiesen.

Der erfindungsgemäße Abziehlack kann mit großem Erfolg bei der Oberflächenbeschichtung von Metallteilen, insbesondere von Aluminiumteilen, eingesetzt werden, wobei auf die üblichen für zwei Komponenten geeigneten Sprüh-, Spritz- und Gießvorrichtungen zurückgegriffen werden kann, die normalerweise bei Temperaturen zwischen +10 bis +40 °C arbeiten. Das Versprühen des Materials kann sowohl luftlos als auch mit Luftzerstäubung erfolgen.

Ein wichtiger Vorteil des erfindungsgemäßen Abziehlackes besteht darin, daß er sowohl auf waagrechte oder runde als auch auf senkrechte Flächen aufgebracht werden kann. Aufgrund der schnellen Härtungsreaktion des erfindungsgemäßen Lackes (Topfzeit: 3 bis 120 Sekunden) bindet der Lack kurz nach dem Auftreffen auf die Metallunterlage ab, so daß dieses Material von den senkrechten Flächen und Rundungen nicht mehr abläuft. Auf diese Weise entsteht ein elastischer und chemisch resistenter Überzug mit Schichtdicken von 0,1 bis 10 mm. Als besonders vorteilhaft ist die Tatsache hervorzuheben, daß für die Herstellung des Überzugs nur noch ein Spritzvorgang erforderlich ist und daß die Trockenzeit maximal 30 Minuten beträgt, woraus eine deutliche Zeit- und Kostenersparnis resultiert.

Nach dieser Trockenzeit läßt sich das Polyurethanelastomer problemlos mit dem Laser schneiden und ist resistent gegenüber dem alkalischen Medium der Beizbäder.

Ein besonderer Vorteil beim Schneiden des Abziehlackes mit einem Laser liegt darin, daß das Elastomer aufschmilzt und dabei größtenteils aus dem ca. 300 µm breiten Schneidgraben entfernt wird. Die verbleibende ca. 30 µm starke Schmelze erstarrt nach dem Abkühlen. Dieser Schmelzrückstand versiegelt den Laserschnitt und ist resistent gegen Natronlauge. Gleichzeitig wird hierdurch eine Sollbruchstelle erzeugt. So können nacheinander Teilbereiche des Abziehlackes entfernt werden, wobei sich dabei unterschiedliche Frästiefen erzeugen lassen.

Im Anschluß an den chemischen Metallabtrag läßt sich der erfindungsgemäße Abziehlack problemlos und rückstandsfrei von der Metalloberfläche entfernen. Auf diese Weise kann bspw. das Ausblasen von thermischen Zersetzungsrückständen aus dem Schnittgraben sowie eine zusätzliche Versiegelung der Laserschnitte entfallen.

Aufgrund dieser besonderen anwendungstechnischen Eigenschaften sowie der Tatsache, daß lösemittelfrei gearbeitet werden kann (wodurch kostenintensive Anlagen zur Rückgewinnung oder Entsorgung von organischen Lösemitteln vermieden werden) eignet sich der erfindungsgemäße Abziehlack in hervorragender Weise für den technischen Einsatz.

### Beispiele

Zur Beschichtung von Aluminiumteilen, die zum Zwecke der Gewichtsreduzierung statisch wenig beanspruchter Teilflächen mit alkalischen Beizbädern behandelt werden sollen, wird die Aluminiumoberfläche einer alkalischen und sauren Vorbehandlung unterzogen, um Oxide und Verunreinigungen zu entfernen. Auf die so vorbehandelte Oberfläche wird ein Abziehlack mit folgenden Rezepturen aufgetragen:

### Rezeptur 1:

### Komponente A:

- 81,00 Gew. -Teile: trifunktioneller Polyetheralkohol auf Basis Propylenoxid, Ethylenoxid und Trimethylolpropan, Mol-Gewicht: 4800, ca. 80 % primäre und ca. 20 % Hydroxylgruppen
- 16,00 Gew.-Teile: Diethyltoluylendiamin mit einem NH-Äquivalent von 130
- 2,00 Gew. -Teile: Kalium-, Natrium-Aluminiumsilikat mit einer Porengröße von 3-4 Å
- 0,60 Gew. -Teile: 1,4-Diazabicyclo[2.2.2]octan
- 0,60 Gew. -Teile: Dimethylzinnmercaptid (in Polyetherpolyol)
- 0,60 Gew.-Teile: 2-Methyl-2-aza-norboman
- 0,30 Gew.-Teile: Abtönpaste gelb, bestehend aus 20 Gew. -% Monoazofarbstoff auf Basis von Acetessiganilid (Hansabrilliant Gelb 2GX 70 der Firma Hoechst)
- 0,10 Gew. -Teile: Alkoxysilan (3-Glycidoxypropyl-tri-methoxysilan)

### Komponente B:

- 50 Gew.-Teile: 4,4'-Diphenylmethandiisocyanat
- 50 Gew.-Teile: trifunktioneller Polyetheralkohol (wie in Komponente A angegeben)

Die beiden Bestandteile der Komponente B werden zu einem Prepolymer mit einem NCO-Gehalt von ca. 15% umgesetzt. Das Gewichtsverhältnis von Komponente A zu Komponente B beträgt 2 : 1 Gew.-Teile.

### Rezeptur 2:

### Komponente A:

- 71,00 Gew.-Teile: trifunktioneller Polyetheralkohol auf Basis Propylenoxid, Ethylenoxid und Trimethylolpropan, Mol-Gewicht: 4800, ca. 80% primäre und ca. 20% sekundäre Hydroxylgruppen
- 8,00 Gew.-Teile: Diethyltoluylendiamin mit einem NH-Äquivalent von 89
- 4,00 Gew.-Teile: Kalium, Natrium-Aluminiumsilikat mit einer Porengröße von 3-4Å
- 0,60 Gew.-Teile: 1,4-Diazabicyclo[2.2.2]octan
- 0,40 Gew.-Teile: Dimethylzinnmercaptid (in Polyetherpolyol)
- 0,60 Gew.-Teile: 2-Methyl-2-aza-norboman
- 0,30 Gew.-Teile: Abtönpaste gelb, bestehend aus 20 Gew.-% Monoazofarbstoff auf Basis von Acetessiganilid (Hansabrilliant Gelb 2GX 70 der Firma Hoechst)
- 0,08 Gew.-Teile: Alkoxysilan (3-Glycidoxypropyl-tri-methoxysilan)
- 15,02 Gew.-Teile: micronisiertes Magnesiumsilikat (Talkum)

### Komponente B:

- 50 Gew.-Teile: 4,4'-Diphenylmethandiisocyanat
- 50 Gew.-Teile: trifunktioneller Polyetheralkohol (wie in Komponente A angegeben)

Die beiden Bestandteile der Komponente B werden zu einem Prepolymer mit einem NCO-Gehalt von ca. 15% umgesetzt. Das Gewichtsverhältnis von Komponente A zu Komponente B beträgt 100 : 46,4 Gew.-Teile.

Der Auftrag des Abziehlackes erfolgt im Spritzverfahren mit Hilfe einer handelsüblichen 2-Komponenten-Spritzanlage (ECONO-MIX D der Fa. Hilger und Kern) im Niederdruckverfahren oder Hochdruckverfahren (2-K-M-Powermix der Fa. Hilger und Kern) bei einer Umgebungstemperatur von ca. 20 bis 25 °C und einer Luftfeuchtigkeit von max. 85 %. Zur besseren Verarbeitbarkeit werden die Komponenten A und B auf ca. 40 °C erwärmt, wobei die Viskosität entsprechend reduziert wird. Aufgrund der kurzen Topfzeit von 6 bis 8 Sekunden bei 40 °C ist es notwendig, daß die Komponenten der Spritzpistole getrennt zugeführt werden, so daß die Vermischung der Komponenten erst im Mischrohr erfolgt. Aufgrund der hohen Reaktivität der Reaktionskomponenten sind die beschichteten Metallteile schon nach 3 Minuten griffest. Die Aushärtung erfolgt bei Raumtemperatur innerhalb von 30 Minuten. Die Schichtdicke des aufgebrachten Abziehlackes beträgt ungefähr 300 µm, wobei diese Schicht sowohl Porenfreiheit als auch Laserschneidbarkeit garantiert. Nach einem Zeitraum von 30 Minuten bezogen auf den Materialauftrag ist das Polyurethan-Elastomer mit einem Laser leicht schneidbar und gegenüber einer 15 %igen NaOH-Lösung bei 80 °C beständig.

Die Laserleistung wird so eingestellt, daß sich das Elastomer verflüssigt und aus dem 300 µm breiten Schneidgraben mittels Luftstrom bis auf 20 bis 30 µm herausgedrückt wird. Das im Schnitt verbleibende Material ist beständig gegen Natronlauge. Ein solcher Laserschnitt bildet eine Sollbruchstelle. Durch aufeinander folgendes Abziehen der verschiedenen Geometrien lassen sich in den Beizbädern unterschiedlich starke Materialabträge erzielen.

Nach dem chemischen Abtragen kann der erfindungsgemäße Lack von den zu schützenden Aluminiumoberflächen leicht von Hand demaskiert werden.

## Patentansprüche

1. Lösemittelfreier, zweikomponentiger Abziehlack für Metalloberflächen, bestehend aus den Komponenten A) und B),
wobei A) im wesentlichen die folgenden Bestandteile enthält:
5 bis 20 Gew.-% eines ggf. substituierten aromatischen Diamins,
0,1 bis 5 Gew.-% eines Entwässerungsmittels,
0,01 bis 1 Gew.-% eines Beschleunigers auf Basis von tertiären Aminen,
0,01 bis 1 Gew. -% eines Beschleunigers auf Basis von organischen Zinnverbindungen,
und als Rest ein Polyetherpolyol auf Basis von Poly(oxyalkylen)glykolen;
und wobei B) im wesentlichen die folgenden Bestandteile enthält:
40 bis 60 Gew. -% eines aromatischen Diisocyanats auf Basis eines Phenylen- oder Toluylendiisocyanats,
40 bis 60 Gew. -% eines Polyetherpolyols auf Basis von Poly(oxyalkylen)glykolen.

2. Abziehlack nach Anspruch 1, dadurch gekennzeichnet, daß das Polyetherpolyol aus einem Poly(oxyalkylen)glykol auf Basis von Propylenoxid, Ethylenoxid und Trimethylolpropan mit einer Molmasse im Bereich von 500 bis 5 000 g/mol besteht.

3. Abziehlack nach den Ansprüchen 1 und 2, dadurch gekennzeichnet, daß das aromatische Diamin in Komponente A) Methyl- und/oder Ethylsubstituenten aufweist.

4. Abziehlack nach Anspruch 3, dadurch gekennzeichnet, daß das aromatische Diamin Diethyltoluylendiamin darstellt.

5. Abziehlack nach Ansprüchen 1 bis 4, dadurch gekennzeichnet, daß das Entwässerungsmittel aus Natrium- und/oder Kalium-Aluminosilikat besteht.

6. Abziehlack nach den Ansprüchen 1 bis 5, dadurch gekennzeichnet, daß der Beschleuniger auf Basis von tertiären Aminen eine bicyclische Verbindung, wie z.B. 1,4-Diazabicyclo[2.2.2]octan oder 2-Methyl-2-azanorbornan ist.

7. Abziehlack nach den Ansprüchen 1 bis 6, dadurch gekennzeichnet, daß der Beschleuniger auf Basis der organischen Zinnverbindung aus Alkylzinnmercaptid besteht.

8. Abziehlack nach den Ansprüchen 1 bis 7, dadurch gekennzeichnet, daß Komponente A) noch 0,01 bis 1 Gew.-% eines Haftvermittlers auf Basis von Alkoxysilanen enthält.

9. Abziehlack nach den Ansprüchen 1 bis 8, dadurch gekennzeichnet, daß die Komponente A) noch 0,1 bis 1 Gew. -% eines alkali- und säurebeständigen Pigments oder Farbstoffs enthält.

10. Abziehlack nach den Ansprüchen 1 bis 9, dadurch gekennzeichnet, daß die Komponente A) noch 1 bis 20 Gew.-% micronisiertes Magnesiumsilikat (Talkum) mit einer Teilchengröße von ca. 5 um enthält.

11. Abziehlack nach den Ansprüchen 1 bis 10, dadurch gekennzeichnet, daß das aromatische Polyisocyanat in Komponente B) aus 4,4'-Diphenylmethandiisocyanat besteht.

12. Abziehlack nach den Ansprüchen 1 bis 11, dadurch gekennzeichnet, daß das Gewichtsverhältnis von Komponente A) zu Komponente B) 3 : 1 bis 1 : 1 beträgt.

13. Abziehlack nach den Ansprüchen 1 bis 12, dadurch gekennzeichnet, daß das Polyurethan-Prepolymer bestehend aus der Komponente B) einen Isocyanatgehalt von 10 bis 20 Gew.-% aufweist.

14. Verfahren zur Oberflächenbeschichtung von Metallteilen, insbesondere von Aluminiumteilen, mit Hilfe des Abziehlackes entsprechend den Ansprüchen 1 bis 13, dadurch gekennzeichnet, daß der Abziehlack mit Hilfe der üblichen für zwei Komponenten geeigneten Vorrichtungen für Sprüh-, Spritz- und Gießverfahren auf die zu schützende Oberfläche aufgebracht wird.

15. Verfahren nach Anspruch 14, dadurch gekennzeichnet, daß der Abziehlack mit einer Schichtdicke von 0,1 bis 10 mm auf die zu behandelnde Metalloberfläche aufgetragen wird.

16. Verfahren nach den Ansprüchen 14 und 15, dadurch gekennzeichnet, daß die Oberflächenbeschichtung mit dem Abziehlack in einem einzigen Spritzgang erfolgt.

17. Verwendung eines Abziehlacks nach den Ansprüchen 1 bis 13 zur Fertigung von gebeizten Aluminiumteilen.

## Claims

1. Solvent-free, two-component strip coating for metal surfaces consisting of components A) and B), whereby A) essentially comprises the following consitutents:
5 to 20% by weight of an optionally substituted aromatic diamine,
0.1 to 5 % by weight of a dehydrator,
0.01 to 1 % by weight of an accelerator based on tertiary amines,
0.01 to 1% by weight of an accelerator based on organic tin compounds,
and a polyether polyol based on poly(oxyalkylene) glycols as the remainder;
and whereby B) essentially comprises the following constituents:
40 to 60% by weight of an aromatic diisocyanate based on a phenylene or toluylene diisocyanate,
40 to 60% by weight of a polyether polyol based poly(oxyalkylene) glycols.

2. Strip coating according to claim 1, characterized in that the polyether polyol consists of a poly(oxyalkylene) glycol based on propylene oxide, ethylene oxide and trimethylolpropane with a molar weight in the range of 500 to 5 000 g/mol.

3. Strip coating according to claims 1 and 2, characterized in that the aromatic diamine in component A) has methyl- and/or ethyl-substitutents.

4. Strip coating according to claim 3, characterized in that diethyltoluylene diamine represents the aromatic diamine.

5. Strip coating according to claims 1 to 4, characterized in that the dehydrator consists of sodium and/or potassium aluminosilicate.

6. Strip coating according to claims 1 to 5, characterized in that the accelerator based on tertiary amines is a bicyclic compound such as for example, 1,4-diazabicyclo [2.2.2]octane or 2-methyl-2-azanorbornane.

7. Strip coating according to claims 1 to 6, characterized in that the accelerator based on the organic tin compound consists of tin alkyl mercaptide.

8. Strip coating according to claims 1 to 7, characterized in that component A) further contains 0.01 to 1% by weight of an adhesion agent based on alkoxysilane.

9. Strip coating according to claims 1 to 8, characterized in that the component A) further contains 0.1 to 1% by weight of an alkali- and acid- stable pigment or dye.

10. Strip coating according to claims 1 to 9, characterized in that the component A) further contains 1 to 20% by weight micronized magnesium silicate (talcum) with a particle size of ca. 5 µm.

11. Strip coating according to claims 1 to 10, characterized in that the aromatic polyisocyanate in component B) consists of 4,4'-diphenylmethane diisocyanate.

12. Strip coating according to claims 1 to 11, characterized in that the weight ratio of component A) to component B) amounts to 3 : 1 to 1 : 1.

13. Strip coating according to claims 1 to 12, characterized in that the polyurethane prepolymer consisting of component B) has an isocyanate content of 10 to 20% by weight.

14. Method for the surface coating of metal parts, especially aluminium parts, with the aid of the strip coating corresponding to claims 1 to 13, characterized in that the strip coating is applied to the surface to be protected with the aid of customary devices for atomization, spray and pour methods suitable for two components.

15. Method according to claim 14, characterized in that the strip coating is applied to the metal surface to be treated with a layer thickness of 0.1 to 10 mm.

16. Method according to claim 14 and 15, characterized in that the surface coating with the strip coating occurs in a single spray operation.

17. Use of a strip coating according to claims 1 to 13 for manufacture of scoured aluminium parts.

## Revendications

1. Vernis pelable à deux composant, exempt de solvant, pour des surfaces métalliques, constitué des composants A) et B),
dans lequel A) contient essentiellement les constituants suivants :
5 à 20 % en poids d'une diamine aromatique, le cas échéant substituée,
0,1 à 5 % en poids d'un agent déshydratant,
0,01 à 1 % en poids d'un accélérateur à base d'amines tertiaires,
0,01 à 1 % en poids d'un accélérateur à base de composés d'étain organiques,
et, comme reste, un polyétherpolyol à base de poly(oxyalkylène)glycols,
et dans lequel B) contient essentiellement les constituants suivants :
40 à 60 % en poids d'un diisocyanate aromatique à base d'un diisocyanate de phénylène ou de toluylène,
40 à 60 % en poids de polyétherpolyol à base de poly(oxyalkylène)glycols.

2. Vernis pelable selon la revendication 1, caractérisé en ce que le polyéther polyol est constitué d'un poly(oxyalkylène)glycol à base d'oxyde de propylène, d'oxyde d'éthylène, et de triméthylolpropane, avec une masse molaire comprise dans la plage d'environ 500 à 5000 g/mole.

3. Vernis pelable selon les revendications 1 et 2, caractérisé en ce que la diamine aromatique que l'on a dans le composant A) présente des substituants méthyl et/ou éthyl.

4. Vernis pelable selon la revendication 3, caractérisé en ce que la diamine aromatique présente de la diéthyltoluylènediamine.

5. Vernis pelable selon les revendications 1 à 4, caractérisé en ce que l'agent déshydratant est constitué d'aluminosilicate de sodium et/ou de potassium.

6. Vernis pelable selon les revendications 1 à 5, caractérisé en ce que l'accélérateur à base d'amines tertiaires est une composé bicyclique, tel que, par exemple, le 1,4-diazabicyclo[2,2,2]octane ou le 2-méthyl-2-azanorbornane.

7. Vernis pelable selon les revendications 1 à 6, caractérisé en ce que l'accélérateur à base du composé d'étain organique est constitué de d'alkylmercaptide d'étain.

8. Vernis pelable selon les revendications 1 à 7, caractérisé en ce que le composant A) contient encore de 0,01 à 1 % en poids d'un agent adhésif à base d'alcoxysilanes.

9. Vernis pelable selon les revendications 1 à 8, caractérisé en ce que le composant A) contient encore de 0,1 à 1 % en poids d'un pigment ou d'un colorant résistant aux alcalis et aux acides.

10. Vernis pelable selon les revendications 1 à 9, caractérisé en ce que le composant A) contient encore de 1 à 20 % en poids de silicate de magnésium micronisé (talc) ayant une taille de particules d'environ 5 µm.

11. Vernis pelable selon les revendications 1 à 10, caractérisé en ce que le polyisocyanate aromatique se trouvant dans le composant B) est constitué de 4,4'-diphénylméthanediisocyanate.

12. Vernis pelable selon les revendications 1 à 11, caractérisé en ce que le rapport de poids entre le composant A) et le composant B) est de 3:1 à 1:1.

13. Vernis pelable selon les revendications 1 à 12, caractérisé en ce que le prépolymère de polyuréthanne constitué du composant B) présente une teneur en isocyanate de 10 à 20 % en poids.

14. Procédé de revêtement de surface de pièces métalliques, en particulier de pièces en aluminium, à l'aide du vernis pelable selon les revendications 1 à 13, caractérisé en ce que le vernis pelable est appliqué à l'aide des dispositifs usuels, appropriés pour deux composants, permettant d'effectuer un procédé par pulvérisation, giclage et coulée, sur la surface à protéger.

15. Procédé selon la revendication 14, caractérisé en ce que le vernis pelable est appliqué avec une épaisseur de couche de 0,1 à 10 mm sur la surface de métal à traiter.

16. Procédé selon la revendication 14 et 15, caractérisé en ce que le revêtement de surface avec le vernis pelable s'effectue en une passe de giclage unique.

17. Utilisation d'un vernis pelable selon les revendications 1 à 13, pour la fabrication de pièces en aluminium décapées.
